# DEMANDE DE BREVET EUROPEEN

(11) **EP 0 860 951 A1**
(43) Date de publication de la demande: **26.08.1998**
(21) Numéro de dépôt: 98200411.1
(22) Date de dépôt: 10.02.1998
(51) Int. Cl.: H04B 1/38

(54) **Equipement de télécommunication muni d'un dispositif de reconnaissance magnétique de périphériques**

(30) Priorité: 25.02.1997 FR 9702226
(71) Demandeur: Koninklijke Philips Electronics N.V., 5621 BA Eindhoven (NL)
(72) Inventeur: Poirel, Alain Yvan René, 75008 Paris (FR)
(74) Mandataire: Chaffraix, Jean

(57) **Abrégé**

L'invention concerne un équipement de télécommunication composé d'un appareil principal destiné à être connecté à un appareil périphérique, ledit équipement étant muni d'un dispositif de reconnaissance magnétique de périphériques constitué d'au moins un couple récepteur / émetteur magnétique pour identifier directement le périphérique par une interaction entre l'émetteur et le récepteur magnétique lors de la connexion dudit périphérique audit appareil principal.

## Description

L'invention concerne un équipement de télécommunication composé d'un appareil principal destiné à être connecté à un appareil périphérique, ledit équipement étant muni d'un dispositif de reconnaissance magnétique de périphériques constitué d'au moins un couple récepteur / émetteur magnétique pour fournir un signal d'identification de périphérique.

L'invention concerne également tout autre équipement composé d'un appareil principal destiné à être connecté à un appareil périphérique, muni d'un tel dispositif de reconnaissance magnétique de périphériques.

Lors de la connexion d'un accessoire ou périphérique à un appareil principal, il peut être nécessaire d'adapter certains paramètres avant d'entamer un dialogue entre les deux appareils. Pour connecter par exemple, un périphérique de type kit mains libres, ordinateur portable ou fax à un radiotéléphone pour une application spécifique, il est impératif d'identifier le périphérique lors de sa connexion, notamment pour alimenter le périphérique avec la tension d'alimentation adéquate et pour activer le protocole de communication approprié.

Un équipement de télécommunication du type mentionné dans le préambule est connu du document DE 43 42 052 A1. Cet équipement est constitué d'un ordinateur pilote relié par un bus de données à des cartes périphériques ayant respectivement une adresse contenue dans une mémoire de type EEPROM (Electrically Erasable Programmable Read Only Memory) dont la lecture peut être activée ou désactivée sous l'action d'un couple aimant / capteur à effet Hall afin d'autoriser l'ordinateur pilote à lire l'adresse de la carte.

Selon l'art antérieur cité, les trois étapes suivantes sont nécessaires pour procéder à la reconnaissance du périphérique :
- établir la connexion entre l'appareil principal et l'appareil périphérique,
- positionner un aimant en face du capteur magnétique de l'appareil périphérique pour activer une mémoire en mode lecture,
- lire le contenu de la mémoire pour connaître l'adresse de la carte et ainsi l'identifier.

Un objet de la présente invention est de fournir des moyens pour reconnaître directement un type de périphérique parmi différents types connus, en une seule étape de connexion dudit périphérique à un appareil principal.

Pour cela, un équipement de télécommunication du type mentionné ci-dessus est caractérisé en ce que ledit signal est fourni directement lors de la connexion dudit périphérique audit appareil principal.

Selon une caractéristique importante de l'invention, un équipement de télécommunication du type déjà mentionné est remarquable en ce ledit dispositif de reconnaissance magnétique est pourvu de moyens pour fournir un signal de début de déconnexion de périphérique. Ainsi, en plus de l'identification d'un périphérique connu, le dispositif de reconnaissance permet de détecter une éventuelle déconnexion des appareils pour déclencher la coupure de l'alimentation en direction du périphérique ainsi que l'arrêt de tous les processus de communication de l'appareil principal.

La description suivante, faite en regard des dessins ci-annexés, le tout donné à titre d'exemple non limitatif fera bien comprendre comment l'invention peut être réalisée.

La figure 1 représente un équipement de télécommmunication selon l'invention.

La figure 2 est un schéma bloc du radiotéléphone 10 représenté à la figure 1.

La figure 3 représente un dispositif de reconnaissance magnétique de périphériques selon un mode de réalisation préférentiel de l'invention utilisant un codage binaire.

La figure 4 illustre un autre mode de réalisation de l'invention.

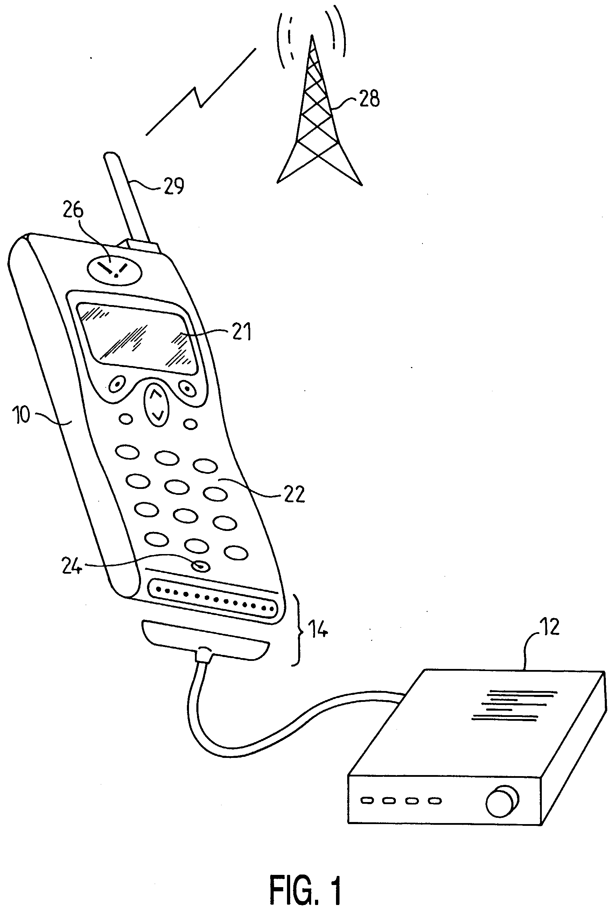

L'équipement de télécommmunication représenté à la figure 1 comprend un appareil principal 10 et un appareil périphérique 12 mis en contact par un dispositif de connexion 14. Bien que l'appareil principal 10 soit un radiotéléphone, le dispositif de reconnaissance de périphériques selon l'invention (non représenté sur cette figure) peut être appliqué à tout autre appareil principal destiné à recevoir un périphérique doté des moyens fournis par l'invention. Le radiotéléphone 10 comporte un écran d'affichage 21, un clavier 22, un microphone 24 et un haut-parleur 26. Un site de base 28 relie le radiotéléphone 10 au réseau de téléphonie mobile par l'échange de signaux radioélectriques avec une antenne 29 couplée à un dispositif d'émission/réception.

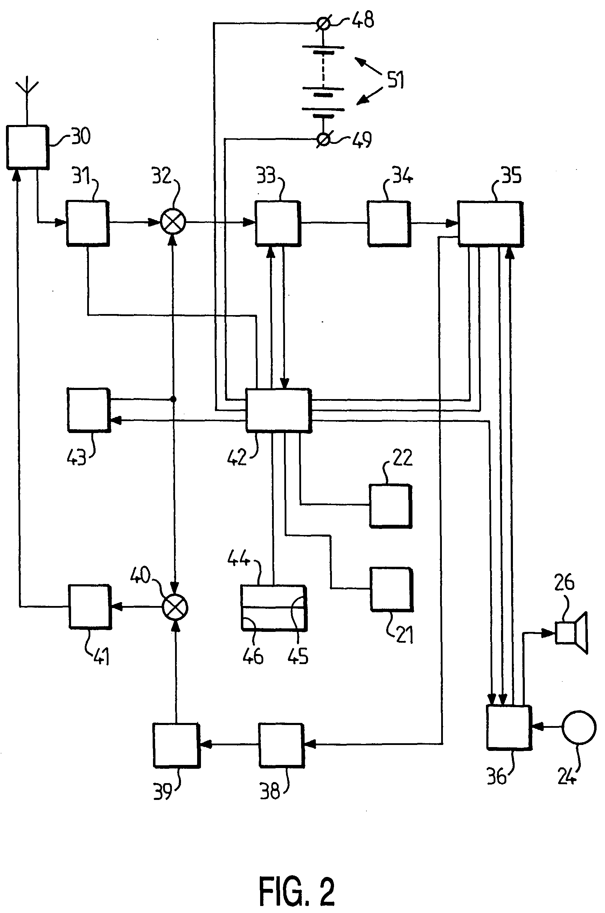

Le brevet européen EP 494 526 B1 présente une description détaillée du radiotéléphone 10 tel qu'il est représenté à la figure 2. Il comprend un circuit de réception et un circuit d'émission, couplés tous deux à un duplexeur d'antenne 30. Le circuit de réception comprend en cascade un filtre RF réglable 31, un mélangeur 32, un filtre à fréquence intermédiaire commutable 33, un détecteur 34, un contrôleur d'accès en temps partagé multiplex ("TDMA") 35, un codeur de parole ("CODEC") 36, et le haut-parleur 26. Le circuit d'émission comprend en cascade le microphone 24, le codeur de parole ("CODEC") 36, le contrôleur d'accès en temps partagé multiplex ("TDMA") 35, un modulateur 38, un oscillateur 39, un mélangeur 40 et un amplificateur de puissance 41. Un microprocesseur 42 est prévu pour contrôler les fonctionnalités du téléphone 10.

Différentes caractéristiques conventionnelles telles que contrôler un synthétiseur 43 pour obtenir un canal ayant une fréquence particulière, commander le contrôleur TDMA 35, échantillonner le clavier 22 et commander l'écran d'affichage 21, ne seront pas décrits plus longuement ici, leur fonctionnement étant connu.

Une mémoire 44 incluant une partie non volatile 45 et une partie volatile 46 est associée au microprocesseur 42. La partie de mémoire non volatile 45 contient un programme de traitement des fonctionnalités du téléphone 10. De plus, l'appareil comprend des connexions d'alimentation 48 et 49 connectés à une batterie interchangeable 51, pour alimenter l'appareil.

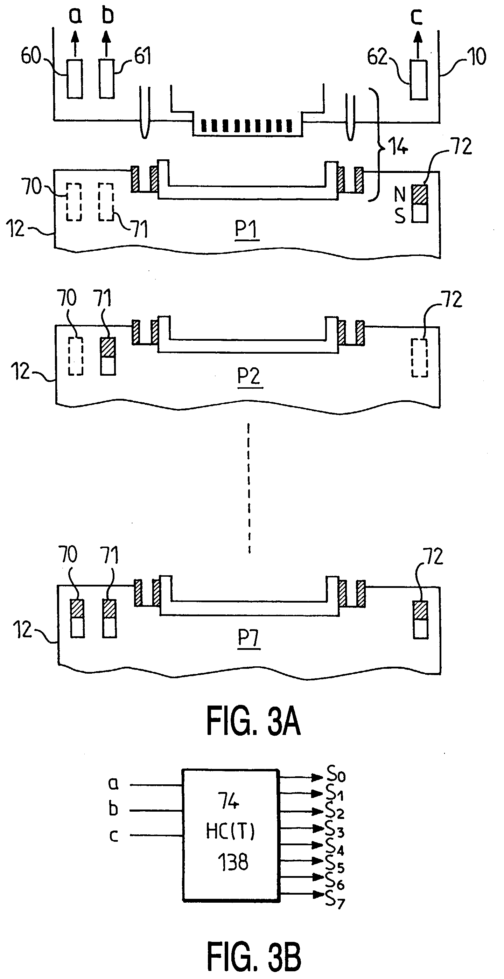

Le schéma de la figure 3 illustre un dispositif de reconnaissance de périphériques montrant les moyens essentiels pour réaliser l'invention dans le cas particulier où l'on a au plus 7 types de périphériques différents à identifier de "Type 1" à "Type 7", représentés respectivement par les périphériques P1 à P7. Le principe de l'invention consiste à mettre en oeuvre un effet magnétique pour transmettre un signal d'identification de périphérique. Si le nombre d'accessoires (ou périphériques) est très limité, on pourra utiliser un codage binaire pour transmettre le signal d'information.

En A à la figure 3, trois capteurs binaires à effet Hall 60, 61, 62 sont placés dans l'appareil principal 10 et de un à trois aimants miniatures sont placés dans les périphériques P1 à P7 selon trois positions 70, 71, 72 de sorte que lorsque les deux appareils sont connectés par le dispositif de connexion 14, les aimants soient placés automatiquement vis-à-vis des capteurs 60, 61 et 62 pour former des couples émetteur / récepteur magnétiques (70/60, 71/61 et 72/62). Le couple 72/62, distant des deux autres couples de quelques centimètres peut être utilisé comme détecteur de connexion ou de déconnexion, son action pouvant être en retard par rapport à celle des deux autre couples 71/61 et 72/62. Dans ce cas, tous les périphériques P1 à P7 doivent comporter un aimant en position 72. Lorsque la face Nord d'un aimant est placée en face d'un capteur binaire à effet Hall, celui-ci détecte le champ magnétique de l'aimant et sa sortie devient active. Ainsi, les capteurs 61, 62 et 63 transmettent sur leurs sorties respectives a, b et c, des états binaires (actif ou inactif) à un dispositif de démultiplexage ou à un microcontrôleur pour le traîtement de l'information.

Un système de discrimination de périphériques sans microcontrôleur, destiné à l'équipement illustré en A est représenté en B à la figure 3. Les états des trois sorties a, b et c sont envoyées en entrée d'un démultiplexeur "3 vers 8" de type 74 HC(T) 138 pour détecter huit situations (2 exp(3)) respectivement sur les 8 sorties S0 à S7. L'activation de la sortie S0 indique qu'aucun périphérique n'est connecté et l'activation d'une sortie S1 à S7 indique qu'un périphérique de Type 1 à 7 a été détecté. Le Tableau I présente les résultats obtenus en fonction des états binaires des sorties a, b et c.

**Tableau I**

| a | b | c | Détection |
|---|---|---|---|
| 0 | 0 | 0 | aucun |
| 0 | 0 | 1 | Type 1 |
| 0 | 1 | 0 | Type 2 |
| 0 | 1 | 1 | Type 3 |
| 1 | 0 | 0 | Type 4 |
| 1 | 0 | 1 | Type 5 |
| 1 | 1 | 0 | Type 6 |
| 1 | 1 | 1 | Type 7 |

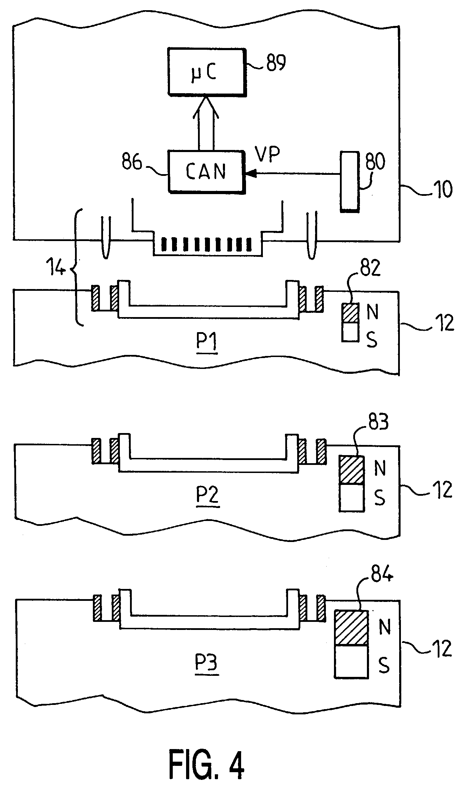

Pour réaliser l'invention dans le cas général où l'on a N périphériques à identifier, N étant supérieur à 7, on pourra augmenter le nombre de couples émetteur / récepteur binaires dans chaque appareil ou bien choisir un autre mode de réalisation, comme par exemple celui représenté à la figure 4 qui présente en outre un encombrement réduit et peut être utilisé dans des appareils de petites dimentions.

Les couples émetteur / récepteur binaires magnétiques ont été avantageusement remplacés par un capteur à effet Hall linéaire 80 dans le système principal 10 associé à des aimants de différentes intensités 82, 83, 84 dans les périphériques P1 à P3. Pour simplifier le schéma on a représenté seulement trois types de périphériques bien que ce mode de réalisation permette d'en reconnaître un plus grand nombre. Un convertisseur analogique-numérique (CAN) 86 couplé au capteur linéaire 80 coopère avec un microcontrôleur 89 pour détecter la présence d'un périphérique du Type 1 à 3 ainsi qu'un début de déconnexion. Le capteur linéaire 80 est en effet capable de mesurer l'intensité du champ magnétique émis par l'aimant et de fournir une tension de sortie VP proportionnelle à l'intensité du champ magnétique mesuré.

Ce mode de réalisation est particulièrement économique dans le cas d'une application à un radiotéléphone de type GSM (Global System for Mobile telecommunication) ou à tout autre terminal comportant des circuits intégrés complexes dont un microprocesseur et un CAN ayant une entrée libre.

La tension VP est alors appliquée à l'entrée libre du CAN et en fonction du code sur 8 bits obtenu en sortie du CAN, le microprocesseur identifie le type de périphérique placé à proximité du capteur linéaire. Le Tableau II donne quelques exemples de valeurs numériques (codes) lues à la sortie du CAN représentant respectivement des fractions de la tension d'entrée VP mesurée. Par exemple, pour un code de sortie compris entre 10 et 50, la tension VP mesurée est comprise entre 10/256 Volts et 50/256 Volts ce qui correspond à la détection d'un périphérique de Type 1.

**Tableau II**

| Code | Détection |
|---|---|
| [ 0 ; 10 ] | Court-circuit |
| [ 10 ; 50 ] | Type 1 |
| [ 50 ; 150 ] | Type 2 |
| [ 150 ; 240 ] | Type 3 |
| [ 240 ; 255 ] | Circuit ouvert |

Ainsi, un équipement de télécommunication muni d'un dispositif de reconnaissance magnétique de périphériques, économique en terme de composants et de place, capable de détecter directement différents types de périphériques lors de leur connexion à l'appareil principal vient d'être décrit en détails. Bien entendu, l'invention n'est pas limitée aux modes de réalisation proposés à titre d'exemple, d'autres variantes de l'invention apparaîtront à l'homme ou la femme de l'art, en particulier en ce qui concerne le choix des couples émetteur / récepteur magnétiques. On pourra par exemple remplacer les capteurs à effet Hall par des ampoules ILS (Interrupteur à Lame Souple), ces variantes ne sortant pas du cadre de l'invention.

## Revendications

1. Equipement de télécommunication composé d'un appareil principal destiné à être connecté à un appareil périphérique, ledit équipement étant muni d'un dispositif de reconnaissance magnétique de périphériques constitué d'au moins un couple récepteur / émetteur magnétique pour fournir un signal d'identification de périphérique, caractérisé en ce que ledit signal est fourni directement lors de la connexion dudit périphérique audit appareil principal.

2. Equipement de télécommunication selon la revendication 1, caractérisé en ce que ledit dispositif de reconnaissance magnétique est pourvu de moyens pour fournir un signal de début de déconnexion de périphérique.

3. Equipement de télécommunication selon l'une des revendications 1 ou 2, caractérisé en ce qu'au moins un récepteur magnétique est un capteur à effet Hall et en ce qu'au moins un émetteur de champ magnétique est un aimant.

4. Equipement de télécommunication selon l'une des revendications 1 à 3, caractérisé en ce qu'au moins un récepteur magnétique est constitué d'un capteur à effet Hall couplé à un convertisseur analogique-numérique pour fournir un signal d'identification de périphérique.

5. Equipement de télécommunication selon l'une des revendications 1 à 4, caractérisé en ce qu'au moins un récepteur magnétique est constitué d'un capteur à effet Hall couplé à un convertisseur analogique-numérique pour fournir un signal de début de déconnexion de périphérique.

6. Equipement de télécommunication selon l'une des revendications 1 à 5, caractérisé en ce qu'au moins un récepteur magnétique est un interrupeur à lame souple.

7. Equipement composé d'un appareil principal destiné à être connecté à un appareil périphérique, ledit équipement étant muni d'un dispositif de reconnaissance magnétique de périphériques constitué d'au moins un couple récepteur / émetteur magnétique pour fournir un signal d'identification de périphérique, caractérisé en ce que ledit signal est fourni directement lors de la connexion dudit périphérique audit appareil principal.

8. Equipement selon la revendication 7, caractérisé en ce que ledit dispositif de reconnaissance magnétique est pourvu de moyens pour fournir un signal de début de déconnexion de périphérique.

9. Equipement selon l'une des revendications 7 ou 8, caractérisé en ce qu'au moins un récepteur magnétique est un capteur à effet Hall et en ce qu'au moins un émetteur de champ magnétique est un aimant.

10. Equipement selon l'une des revendications 7 à 9, caractérisé en ce qu'au moins un récepteur magnétique est constitué d'un capteur à effet Hall couplé à un convertisseur analogique-numérique pour fournir un signal d'identification de périphérique.

11. Equipement selon l'une des revendications 7 à 10, caractérisé en ce qu'au moins un récepteur magnétique est constitué d'un capteur à effet Hall couplé à un convertisseur analogique-numérique pour fournir un signal de début de déconnexion de périphérique.

12. Equipement selon l'une des revendications 7 a 11, caractérisé en ce qu'au moins un récepteur magnétique est un interrupeur à lame souple.
